(19) Europäisches Patentamt
European Patent Office
Office européen des brevets

(11) EP 0 992 514 B1

(12) FASCICULE DE BREVET EUROPEEN

(45) Date de publication et mention de la délivrance du brevet:
**14.07.2004 Bulletin 2004/29**

(51) Int Cl.[7]: **C08F 4/00**, C08F 2/38, C08F 293/00

(21) Numéro de dépôt: **99118539.8**

(22) Date de dépôt: **20.09.1999**

# (54) Polymérisation radicalaire en présence de plusieurs radicaux libres stables

Radikalische Polymerisation in Gegenwart von mehreren stabilen, freien Radikalen

Radical polymerisation in the presence of several stable free radicals

(84) Etats contractants désignés:
**AT BE CH CY DE DK ES FI FR GB GR IE IT LI LU MC NL PT SE**

(30) Priorité: **06.10.1998 FR 9812477**

(43) Date de publication de la demande:
**12.04.2000 Bulletin 2000/15**

(73) Titulaire: **Atofina**
**92800 Puteaux (FR)**

(72) Inventeurs:
- **Senninger, Thierry**
  **57700 Hayange (FR)**
- **Robin, Sophie**
  **Rue Frédéric Sévéne, 33400 Talence (FR)**
- **Gnanou, Yves**
  **33400 Talence (FR)**

(56) Documents cités:
**EP-A- 0 814 097**
**EP-A- 0 826 697**
**EP-A- 0 832 902**
**EP-A- 0 844 256**
**EP-A- 0 906 937**
**WO-A-98/30601**
**US-A- 5 616 638**
**US-A- 5 721 320**
**US-A- 5 744 560**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 992 514 B1

Printed by Jouve, 75001 PARIS (FR)

## Description

L'invention concerne un procédé de polymérisation radicalaire en présence de plusieurs radicaux libres stables.

La polymérisation radicalaire en présence d'un radical libre stable mène à un polymère de polydispersité étroite et permet la réalisation de polymères à bloc par un mécanisme de polymérisation vivante.

La présence d'un radical libre stable lors d'une polymérisation se traduit cependant généralement par un ralentissement de la vitesse de polymérisation.

L'importance de ce ralentissement dépend de la nature du radical libre stable.

Certains radicaux libres stables ralentissent moins la polymérisation, mais d'un autre côté, procurent un moins bon contrôle de ladite polymérisation et/ou sont onéreux et/ou se dégradent au cours de la polymérisation. Il est donc utile d'avoir accès à des systèmes de polymérisation radicalaire contrôlée à la fois rapide, peu onéreux et bien contrôlés par le radical libre stable, le plus longtemps possible au cours de la polymérisation.

Une polymérisation radicalaire est d'autant mieux contrôlée grâce à la présence d'un radical libre stable, que la courbe représentant l'évolution de la masse moléculaire moyenne en nombre en fonction de la conversion de monomère en polymère se rapproche de la linéarité. C'est grâce au fait qu'un procédé de polymérisation radicalaire est contrôlé par un radical libre stable que ledit procédé permet la réalisation de polymères séquencés (c'est-à-dire à blocs) par introduction successive de différents monomères dans le milieu de polymérisation.

Il est rappelé que la notion de radical libre stable est connue de l'homme du métier pour désigner un radical tellement persistant et non réactif vis-à-vis de l'air et de l'humidité dans l'air ambiant, que le radical pur peut être manipulé et stocké sans plus de précautions à la température ambiante que le sont la majorité des produits chimiques commerciaux (voir à ce sujet D. Griller et K. Ingold, Accounts of Chemical Research, 1976, 9, 13-19, ou Organic Chemistry of Stable Free Radicals, A. Forrester et coll., Academic Press, 1968).

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azoïques. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié par une liaison covalente à une chaîne de polymère. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante. Un radical libre stable est suffisamment stable pour que son état de radical libre puisse être caractérisé par les méthodes spectroscopiques.

Le radical libre stable forme pendant la polymérisation une liaison réversible avec la chaîne de polymère en croissance. En bout de chaîne de polymère, le radical libre stable alterne en permanence l'état de groupement lié par une liaison covalente à ladite chaîne et l'état de radical libre stable détaché de ladite chaîne pour laisser s'insérer une unité de monomère, suivant le processus suivant,

$$1) \quad -M-Y \rightleftharpoons -M^{\bullet} + Y^{\bullet}$$

$$2) \quad -M^{\bullet} + M + Y^{\bullet} \rightarrow -M-M-Y$$

dans lequel -M représente une unité de monomère de la chaîne en croissance, M représente une unité de monomère et $Y^{\bullet}$ représente le radical libre stable pour le cas où ce dernier est monofonctionnel, c'est-à-dire que sa molécule n'est porteuse que d'un seul site présentant l'état de radical. Ce processus se repète pour faire croître la chaîne de polymère par insertion de monomère entre la chaîne en croissance et le radical libre stable.

Pour le cas où un amorceur de polymérisation radicalaire a été introduit dans le milieu de polymérisation, un autre moyen pour se rendre compte du degré de contrôle de la polymérisation est de comparer la masse moléculaire moyenne en nombre observée (Mn expérimentale) à la masse moléculaire moyenne en nombre théorique (Mn théorique) telle qu'on la calcule par l'équation :

$$\text{Mn théorique} = \frac{(M) \, . \, C \, . \, Mo}{F_{AMO} \, (AMO)}$$

dans laquelle
(M) représente le nombre de mole de monomère,
C représente la conversion du monomère en polymère (pouvant aller de 0 pour une conversion nulle à 1 pour une conversion totale) égale au rapport :

$$\frac{\text{masse de polymère formé}}{\text{masse de monomère restante + masse de polymère formé}},$$

$F_{AMO}$ représente la fonctionnalité de l'amorceur, c'est-à-dire le nombre de sites présentant l'état de radical libre que chaque molécule d'amorceur est capable de générer,
(AMO) représente le nombre de mole d'amorceur,
Mo représente la masse molaire du monomère.

Le contrôle de la polymérisation est d'autant meilleur que $M_n$ expérimentale est proche de $M_n$ théorique.

Comme exemple d'amorceur dont la fonctionnalité $F_{AMO}$ est de 2, on peut citer le peroxyde de dicumyle.

Comme exemple d'amorceur dont la fonctionnalité $F_{AMO}$ est de 4, on peut citer le 3,3-di(tert-amylperoxy)-butyrate d'éthyle que l'on peut représenter par :

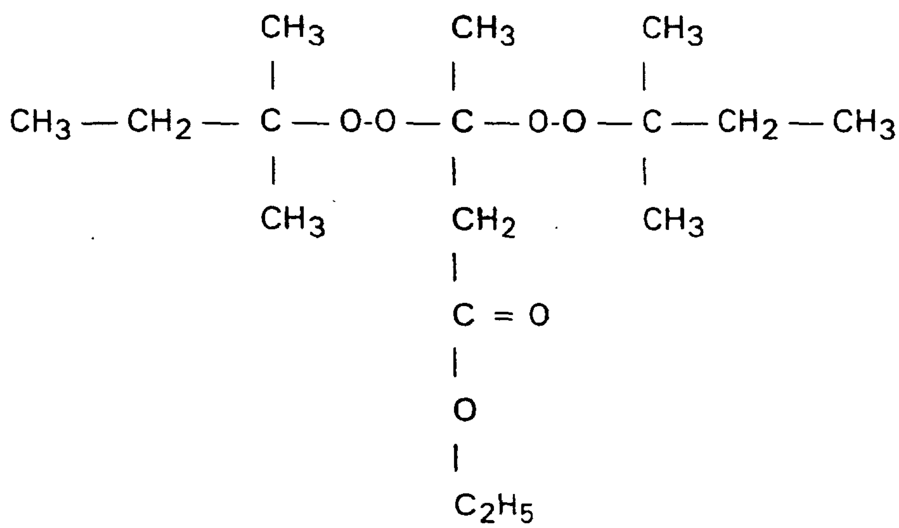

car il contient deux enchaînements — O — O — susceptibles chacun de générer deux sites présentant l'état de radical libre, à savoir — O•.

L'invention répond aux problèmes sus-mentionnés. L'invention concerne un procédé de polymérisation radicalaire d'au moins un monomère en présence d'au moins deux radicaux libres stables de natures différentes. Les deux radicaux libres stables sont choisis de façon à ce qu'ils présentent des constantes d'équilibre différentes compte tenu du monomère à polymériser et de la température de polymérisation.

Cette constante d'équilibre d'un radical libre stable vis-à-vis d'un monomère caractérise l'équilibre de la réaction :

$$(\text{—}\,M)_{F_Y}\text{—}\,Y \rightleftharpoons F_Y(\text{—}\,M^{\bullet}) + Y^{F_Y\bullet}$$

dans laquelle
M représente une unité de monomère, laquelle est liée à une autre unité de monomère ou à un reste d'amorceur,
$M^{\bullet}$ représente une unité de monomère sous forme radicalaire, Y $F_Y^{\bullet}$ représente le radical libre stable dont la fonctionnalité est égale à $F_Y$, ce qui signifie que la molécule de radical libre stable présente un nombre de sites présentant l'état de radical égal à $F_Y$,
Y représente le groupement issu du radical libre stable lorsque celui-ci est relié à autant d'unité de monomère que sa fonctionnalité, lui faisant perdre de ce fait son état de radical.

Pour un monomère donné et une température de polymérisation donnée, au moins deux des radicaux libres stables présentent des constantes d'équilibre telles que leur rapport soit supérieur à 5, de manière préférée supérieur

à 10 et de manière encore préférée supérieur à 100.

Comme exemple de radical libre stable dont la fonctionnalité est égale à 1, on peut citer une molécule représentée par :

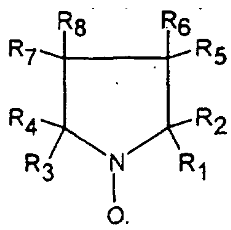

dont les groupements R1, R2, R3, R4, R5, R6, R7 et R8 représentent des radicaux alkyle.

Comme exemple de radical libre stable dont la fonctionnalité est égale à 2, on peut citer une molécule représentée par :

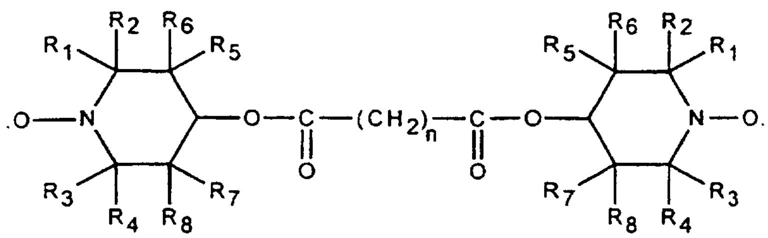

dont les groupements $R_1$, $R_2$, $R_3$, $R_4$, $R_5$, $R_6$, $R_7$, $R_8$ représentent des radicaux alkyle et n représente un nombre entier non nul, par exemple allant de 1 à 20.

La constante d'équilibre K est telle que

$$K = \frac{[- M^{\bullet}].[Y^{F_Y \bullet}]}{[(- M)_{F_Y} - Y]}$$

dans laquelle :

[— M•] représente la concentration en espèce portant au moins une unité de monomère sous forme radicalaire,
[Y $^{F_Y}$.] représente la concentration en radical libre stable,
[(— M)$_{F_Y}$— Y] représente la concentration en espèce portant l'enchaînement (— M)$_{F_Y}$— Y dans lequel le radical libre stable est porté sous une forme liée par autant de liaisons covalentes que sa fonctionnalité à autant d'unités de monomère que sa fonctionnalité.

Ainsi, lorsque le radical libre stable est monofonctionnel ($F_Y$ = 1), la contante d'équilibre

$$K = \frac{[- M^{\bullet}].[Y^{\bullet}]}{[-M -Y]}$$

caractérise l'équilibre

$$— M — Y \rightleftharpoons — M^{\bullet} + Y^{\bullet}$$

Y• représentant le radical libre stable monofonctionnel. Ainsi, lorsque le radical libre stable est bifonctionnel ($F_Y$ = 2), la constante d'équilibre

$$K = \frac{[-M^{\bullet}].[Y^{2\bullet}]}{[-M-Y-M-]}$$

caractérise l'équilibre

$$-M-Y-M- \rightleftharpoons 2-M^{\bullet} + Y^{2\bullet}$$

$Y^{2\bullet}$ représentant le radical libre stable bifonctionnel.

La vitesse de polymérisation est d'autant plus faible que le couple monomère/radical libre stable a une constante d'équilibre faible, pour un monomère donné.

Il a été constaté que l'usage d'un mélange de radicaux libres stables présentant des constantes d'équilibre différentes se traduit par une productivité supérieure à celle que l'on attendrait en calculant la moyenne arithmétique des productivités obtenues avec chacun des radicaux libres stables lorsqu'ils sont utilisés individuellement, dans des conditions de polymérisation par ailleurs identiques.

Par productivité, on entend la quantité de polymère obtenu par heure de polymérisation lorsque la conversion de monomère en polymère est de 0,95.

Ainsi, dans le cas de l'usage de deux radicaux libres stables, on observe la relation :

$$P > xP_1 +(1-x)P_2$$

dans laquelle

P représente la productivité dans le cas de l'usage de deux radicaux libres stables, respectivement présents avec les fractions molaires x et 1-x,

P1 représente la productivité dans le cas de l'usage du seul premier radical libre stable lorsqu'il est en concentration égale à la somme des concentrations des deux radicaux libres stables,

P2 représente la productivité dans le cas de l'usage du seul second radical libre stable lorsqu'il est en concentration égale à la somme des concentrations des deux radicaux libres stables.

Il a été constaté que l'usage d'un mélange de radicaux libres stables présentant des constantes d'équilibre différentes se traduit par une vitesse de polymérisation supérieure à celle que l'on attendrait en calculant la moyenne arithmétique des vitesses de polymérisation obtenues avec chacun des radicaux libres stables lorsqu'ils sont utilisés individuellement. Ainsi, dans le cas de l'usage de deux radicaux libres stables, on observe pendant la polymérisation correspondant à une conversion supérieure à 0,5, la relation :

$$C > x\,C_1 + (1-x)\,C_2$$

dans laquelle

C représente la conversion de monomère en polymère dans le cas de l'usage d'un mélange de deux radicaux libres stables, respectivement présents avec les fractions molaires x et 1-x, ladite conversion C étant supérieure à 0,5,

$C_1$ représente la conversion de monomère en polymère dans le cas de l'usage du seul premier radical libre stable lorsqu'il est en concentration égale à la somme des concentrations des deux radicaux libres stables,

$C_2$ représente la conversion de monomère en polymère dans le cas de l'usage du seul second radical libre stable lorsqu'il est en concentration égale à la somme des concentrations des deux radicaux libres stables.

La constatation de la synergie résultant de la présence de deux radicaux libres stables lors de la polymérisation, ladite constatation étant réalisée sur la base des conversions, implique la comparaison de trois polymérisations à la même durée de polymérisation, dans des conditions de polymérisation comparables,

- une première polymérisation étant réalisée en présence de deux radicaux libres stables avec une conversion de monomère en polymère supérieure à 0,5, la somme du nombre de mole des deux radicaux libres stables étant égale à n,
- une seconde polymérisation étant réalisée en présence de l'un des deux radicaux libres stables, ledit radical libre stable étant présent à raison d'un nombre de mole n, ladite seconde polymérisation ne présentant pas nécessairement une conversion supérieure à 0,5,
- une troisième polymérisation étant réalisée en présence de l'autre des deux radicaux libres stables, ledit radical libre stable étant présent à raison d'un nombre de mole n, ladite troisième polymérisation ne présentant pas nécessairement une conversion supérieure à 0,5.

Pour la réalisation de la présente invention, la combinaison d'au moins deux radicaux libres stables peut par exemple être telle que :

- le premier radical libre stable ralentit fortement la polymérisation, est très stable thermiquement (faible dégradation au cours de la polymérisation) et présente un faible coût,
- le second radical libre stable ralentit moins fortement la polymérisation, est moins stable thermiquement et présente un coût plus élevé.

La combinaison de deux tels radicaux libres stables conduit à une forte vitesse de polymérisation malgré l'usage du radical libre stable devant théoriquement la ralentir fortement (sur la base du calcul de la moyenne arithmétique des conversions obtenues avec chacun des radicaux libres stables lorsqu'ils sont utilisés individuellement), et procure un bon contrôle de la polymérisation, pour une durée suffisante et un coût modéré.

La famille des radicaux libres stables inclut notamment les composés agissant comme inhibiteurs de polymérisation radicalaire pour le stockage de monomères, les radicaux nitroxyles stables c'est-à-dire comprenant le groupement = N-O•. On peut utiliser comme radical libre stable par exemple les radicaux représentés par les formules suivantes:

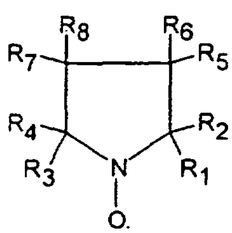
,
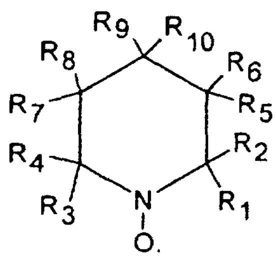
,
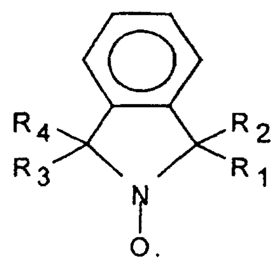
,

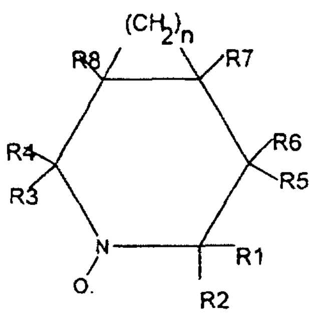
,
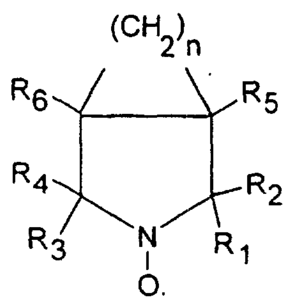
,
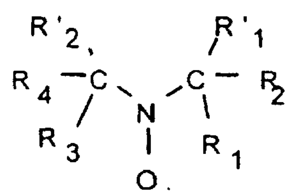

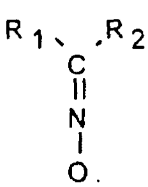
,
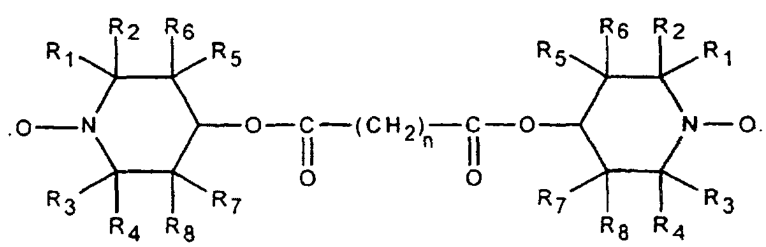
,

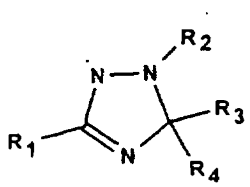 , 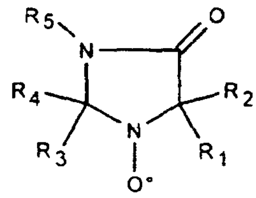 , 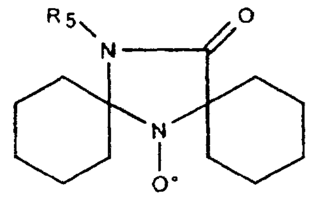

dans lesquelles n représente un nombre entier non nul et R1, R2, R3, R4, R'1 et R'2 pouvant être identiques ou différents représentent un atome d'hydrogène, un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphonate $-PO(OR)_2$, ou une chaîne de polymère pouvant par exemple être une chaîne de poly(méth)acrylate d'alkyle comme le polyméthacrylate de méthyle, de polydiène comme le polybutadiène, de polyoléfine comme le polyéthylène ou le polypropylène, mais étant de préférence une chaîne de polystyrène, et dans lesquelles R5, R6, R7, R8, R9 et R10, pouvant être identiques ou différent, peuvent être choisis dans la même famille de groupement que celle qui vient d'être envisagée pour R1, R2, R3, R4, R'1 et R'2, et de plus peuvent représenter un groupement hydroxyde -OH, un groupement acide tel que -COOH ou $-PO(OH)_2$ ou $-SO_3H$.

En particulier, on peut utiliser comme radical libre stable le 2,2,5,5-tétraméthyl-1-pyrrolidinyloxy commercialisé sous la marque PROXYL, le 2,2,6,6-tétraméthyl-1-piperidinyloxy, généralement commercialisé sous la dénomination TEMPO, le 4-hydroxy-2,2,6,6-tétraméthyl-1-pipéridinyloxy commercialisé sous la dénomination 4-hydroxy TEMPO, le 4-méthoxy-2,2,6,6-tétraméthyl-1-pipéridinyloxy communément appelé 4-méthoxy-Tempo, le 4-oxo-2,2,6,6-tétraméthyl-1-pipéridinyloxy communément appelé 4-oxo-Tempo, le bis(1-oxyl-2,2,6,6-tétraméthylpipéridine-4-yl)sébacate commercialisé sous la marque CXA 5415 par la société Ciba Specialty Chemical, le 2,2,6,6-tétraméthyl-4-hydroxypipéridine-1-oxyl monophosphonate, le 3-carboxy-2,2,5,5-tétraméthylpirrolidinyloxy (communément appelé 3-carboxy proxyl).

On peut également utiliser comme radical libre stable ceux de la liste suivante :

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- N-tertiobutyl-1-di(2,2,2-trifluoroéthyl)phosphono-2,2-diméthylpro pyl nitroxyde,
- N-tertiobutyl-[(1-diéthylphosphono)-2 méthyl propyl] nitroxyde,
- N-(1-méthyléthyl)-1-cyclohexyl-1-(diéthylphosphono) nitroxyde,
- N-(1-phényl benzyl)-[(1-diéthyl phosphono)-1-méthyl éthyl]nitro xyde,
- 2,4,6-tri-tert-butylphenoxy.

Dans le cadre de la présente invention, au moins deux des radicaux libres stables peuvent par exemple être tels que :

- le premier présente dans sa structure l'enchaînement

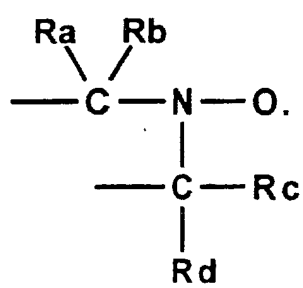

dans lequel les radicaux Ra, Rb, Rc et Rd, pouvant être identiques ou différents, sont soit un atome d'hydrogène, soit un radical méthyle,

- le second présente dans sa structure l'enchaînement

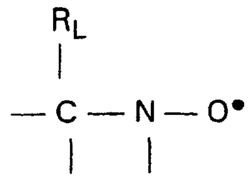

dans lequel $R_L$ représente un radical monovalent dont la masse molaire est supérieure à 15. Le radical $R_L$ peut par exemple être choisi dans la liste proposée pour le choix des radicaux R1, R2, R3, R4, R'1 et R'2 vus précédemment, dès lors qu'il présente une masse molaire supérieure à 15.

Dans cette combinaison de radicaux libres stables, $R_L$ a de préférence une masse molaire supérieure à 30, par exemple allant de 40 à 400.

Au moins deux des radicaux libres stables peuvent donc être tels que :

- le premier soit choisi parmi
  le 2,2,6,6-tétraméthyl-1-piperidinylloxy (communément appelé Tempo),
  le 4-hydroxy-2,2,6,6,-tétraméthyl-1-pipéridinyloxy (communément appelé 4-hydroxy-Tempo),
  le 4-méthoxy-2,2,6,6-tétraméthyl-1-pipéridinyloxy (communément appelé 4-méthoxy-TEMPO),
  le 4-oxo-2,2,6,6-tétraméthyl-1-pipéridinyloxy (communément appelé 4-oxo-TEMPO),
  le bis(1-oxyl-2,2,6,6-tétra méthylpipéridine-4-yl) sébacate pouvant être représenté par la formule

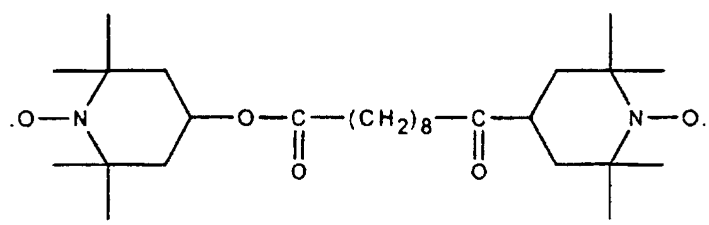

,

  le 2,2,6,6-tétraméthyl-4-hydroxypipéridine-1-oxyl monophosphona te,
  le 3-carboxy-2,2,5,5-tétraméthylpirrolidinyloxy (communément appelé 3-carboxy proxyl),
  et,
- le second soit choisi parmi
  le N-tertiobutyl-1-diéthyl-phosphono-2,2-diméthylpropylnitroxyde,
  le N-tertiobutyl-1-dibenzylphosphono-2,2-diméthylpropyl nitroxy de,
  le N-tertiobutyl-1-di(2,2,2-trifluoroéthyl)phosphono-2,2-diméthyl propyl nitroxyde,
  le N-tertiobutyl-[(1-diéthylphosphono)-2 méthyl propyl] nitroxyde,
  le N-(1-méthyléthyl)-1-cyclohexyl-1-(diéthylphosphono) nitroxyde,
  le N-(1-phényl benzyl)-[(1-diéthyl phosphono)-1-méthyl éthyl] nitroxyde.

Les radicaux libres stables peuvent être présents de sorte qu'à la température de polymérisation :

$$\sum_{i=1}^{t} [F_{SFR^i} \times (SFR^i)]$$

aille de $5.10^{-7}$ à 0,5 mole par mole de monomère et de préférence de $5.10^{-6}$ à 0,5 mole par mole de monomère, $F_{SFR^i}$ représentant la fonctionnalité du $i^{ème}$ radical libre stable $SFR^i$, c'est-à-dire le nombre de sites sur la même molécule de radical libre stable présentant l'état de radical, t représentant le nombre de radicaux libres stables dans le milieu

de polymérisation,

($SFR^i$) représentant le nombre de mole du $i^{ème}$ radical libre stable.

La quantité ($SFR^i$) prend en compte la totalité des espèces jouant le rôle du ième radical stable, c'est-à-dire ledit radical libre stable sous forme libre, mais aussi sous forme liée par une liaison covalente au sein d'une molécule, ladite molécule étant capable de le générer dans les conditions d'utilisation. Une telle molécule est dite porteuse d'un groupement générateur d'un radical libre stable. En effet, chaque radical libre stable peut être introduit sous forme libre et/ou sous forme lié par une liaison covalente dans une molécule de façon à ce que lors de son utilisation, la molécule libère le radical libre stable. Par exemple, pour le cas d'un radical libre stable monofonctionnel, celui-ci peut être introduit sous la forme d'une molécule comprenant un groupement générateur de radical libre stable que l'on peut représenter par — A — Y, de façon à ce que lors de la polymérisation, ce groupement se scinde pour former - $A^\bullet$ + $Y^\bullet$, $Y^\bullet$ représentant le radical libre stable monofonctionnel. Bien entendu, le groupement — A — Y ne présente pas lui-même le caractère radicalaire mais il génère in situ une molécule présentant ce caractère.

Au moins deux radicaux libres stables peuvent être présents en quantités telles que le rapport

$$\frac{F_{SFR}{}^{1} \,.\, (SFR^{1})}{F_{SFR}{}^{2} \,.\, (SFR^{2})}$$

aille de 0,001 à 1 000,

et de manière encore préférée de 0,01 à 100,

dans lequel

$F_{SFR}{}^1$ représente la fonctionnalité d'un premier radical libre stable $SFR^1$,

($SFR^1$) représente le nombre de mole dudit premier radical libre stable,

$F_{SFR}{}^2$ représente la fonctionnalité d'un second radical libre stable $SFR^2$,

($SFR^2$) représente le nombre de mole dudit second radical libre stable.

Au moins un amorceur de polymérisation radicalaire peut être utilisé pour initier la polymérisation. Un tel amorceur peut être introduit en quantité telle que $F_{AMO}$ . (AMO) aille de $1.10^{-5}$ à 0,1 et de préférence de $1.10^{-4}$ à 0,1 mole par mole de monomère, $F_{AMO}$ et (AMO) ayant les significations précédemment données.

Les quantités de radical libre stable et d'amorceur pourront être telles que le rapport :

$$\frac{\sum_{i=1}^{t} F_{SFR}{}^{i} \,.\, (SFR^{i})}{\sum_{j=1}^{z} [F_{AMO}{}^{j} \times (AMO^{j})]}$$

aille de 0,05 à 5

et de préférence de 0,5 à 2,5, $F_{AMO}{}^j$ représentant la fonctionnalité du jème amorceur $AMO^j$ et ($AMO^j$) représentant le nombre de mole du jème amorceur par mole de monomère, pour le cas où t radicaux libres stables devraient intervenir et pour le cas où z amorceurs de polymérisation devraient intervenir, i, j, t et z étant des nombres entiers non nuls.

L'amorceur peut être choisi parmi les amorceurs de polymérisation radicalaires connus pour amorcer la polymérisation du monomère devant polymériser.

L'amorceur est un amorceur de polymérisation radicalaire pouvant être choisi parmi les peroxydes de diacyle, les peroxyesters, les peroxydes de dialkyle, les peroxyacétals. Des amorceurs particulièrement adaptés sont les suivants :

- carbonate d'isopropyle et de peroxy-tert-butyle,
- carbonate d'éthyle-2 hexyle et de peroxy-tert-butyle,
- peroxyde de dicumyle,
- peroxyde de ditertiobutyle,
- bis(tert-butylperoxy)-1,1cyclohexane,
- bis(tert-butylperoxy)1-1,1triméthyl-3,3,5 cyclohexane,
- tertiobutylperoxyacétate,
- peroxyde de cumyle et de tertiobutyle,

- perbenzoate de tertiobutyle,
- éthyl-2 perhexanoate de tertiobutyle.
- bis(tert-butylperoxy)-2,2butane,
- bis(tert-butyl)-4,4valérate de butyle,
- bis(tert-butyl)-3,3butyrate d'éthyle,
- 2,2-bis(4,4-ditert-butylperoxycyclohexyl)propane.

Le procédé selon l'invention permet la préparation de polymères à blocs. En effet, la polymérisation d'un premier monomère par le procédé selon l'invention mène à un bloc de polymère vivant. Il est alors possible de raccorder à ce premier bloc, un bloc d'un autre polymère en plaçant le premier bloc de polymère vivant dans un milieu de polymérisation d'un second monomère. Il est ainsi possible de réaliser des copolymères à blocs, par exemple, des copolymères comprenant un ou plusieurs blocs de polystyrène et un ou plusieurs blocs de polybutadiène, ou des copolymères comprenant un ou plusieurs blocs de polystyrène et un ou plusieurs blocs du type (méth)acrylate.

En pratique, la réalisation des blocs peut se faire à la suite les uns des autres, dans le même appareillage. Lorsque le premier monomère est consommé de façon à réaliser le premier bloc, il suffit d'introduire le second monomère destiné à la réalisation du second bloc, sans arrêter l'agitation et sans refroidissement ou autre interruption. Bien entendu, suivant la nature des monomères, les conditions de constitution de chacun des blocs, comme la température du milieu de polymérisation, pourra être adaptée.

Bien entendu, il est possible d'accoler autant de blocs que l'on souhaite au polymère vivant en plaçant celui-ci dans un milieu de polymérisation d'un monomère dont on souhaite constituer un bloc.

Ainsi, l'invention concerne également un procédé de préparation d'un polymère à blocs comprenant au moins une étape selon l'invention, menant à un premier bloc vivant, ledit bloc vivant étant ensuite placé en présence d'au moins un autre monomère dont on souhaite constituer un bloc accolé au premier bloc, de façon à former un dibloc vivant, et ainsi de suite, suivant le nombre de blocs que l'on souhaite réaliser.

Ainsi, la présente demande concerne également un procédé de préparation d'un polymère dibloc comprenant une étape de polymérisation d'un premier monomère conformément à l'invention, de façon à obtenir un premier bloc vivant, suivie d'une étape au cours de laquelle le premier bloc vivant est placé en présence d'un second monomère que l'on polymérise de façon à former un second bloc accolé au premier bloc.

La présente demande concerne donc également un procédé de préparation d'un polymère tribloc comprenant une étape de polymérisation d'un troisième monomère en présence du polymère dibloc préparé conformément à ce qui vient d'être dit, de façon à former un troisième bloc accolé au polymère dibloc.

A titre d'exemple, les polymères à blocs suivants peuvent être réalisés :

polystyrène-b-polyméthacrylate de méthyle,
polystyrène-b-polystyrènesulfonate,
polystyrène-b-polyacrylamide,
polystyrène-b-polyméthacrylamide,
polyméthacrylate de méthyle-b-polyacrylate d'éthyle,
polystyrène-b-polyacrylate de butyle,
polybutadiène-b-polyméthacrylate de méthyle,
polyisoprène-b-polystyrène-co-acrylonitrile,
polybutadiène-b-polystyrène-co-acrylonitrile,
polystyrène-co-acrylate de butyle-b-polyméthacrylate de méthyle,
polystyrène-b-polyacétate de vinyle,
polystyrène-b-polyacrylate de 2-hexyléthyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polystyrène-b-polybutadiène-b-polystyrène,
polystyrène-b-polyisoprène-b-polystyrène,
polyacrylate de perfluorooctyle-b-polyméthacrylate de méthyle,
polyacrylate de perfluorooctyle-b-polystyrène,
polyacrylate de perfluorooctyle-b-polyacrylate de behenyle,
polyacrylate de perfluorooctyle-b-polyméthacrylate de stéaryle,
polyacrylate de n-octyle-b-polyméthacrylate de méthyle.

Par monomère, on entend tout monomère polymérisable ou copolymérisable par voie radicalaire. Le terme

"monomère" recouvre les mélanges de plusieurs monomères.

Le monomère peut être choisi parmi les monomères vinyliques, vinylidéniques, diéniques, oléfiniques et allyliques.

Par monomères vinyliques, on entend les (méth)acrylates, les monomères vinylaromatiques, les esters vinyliques, le (méth)acrylonitrile, le (méth)acrylamide et les mono- et di-(alkyl à 1 à 18 atomes de carbone)-(méth)acrylamides, et les monoesters et diesters de l'anhydride maléique et de l'acide maléique.

Les (méth)acrylates sont en particulier ceux des formules respectivement :

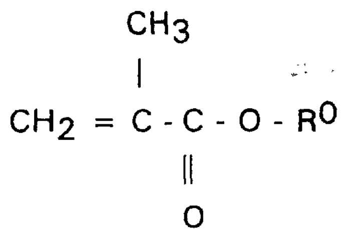

et

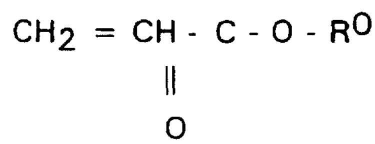

dans lesquelles $R^0$ est choisi parmi les radicaux alkyle comprenant de 1 à 18 atomes de carbone, linéaires ou ramifiés, primaires, secondaires ou tertiaires, cycloalkyle comprenant de 5 à 18 atomes de carbone, (alcoxy à 1 à 18 atomes de carbone)-alkyle à 1 à 18 atomes de carbone, (alkylthio à 1 à 18 atomes de carbone)-alkyle à 1 à 18 atomes de carbone, aryle et arylalkyle, ces radicaux étant éventuellement substitués par au moins un atome d'halogène (tel que le fluor) et/ou au moins un groupe hydroxyle après protection de ce groupe hydroxyle, les groupes alkyle ci-dessus étant linéaires ou ramifiés ; et les (méth)acrylates de glycidyle, de norbornyle, d'isobornyle.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle,de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

Comme exemples d'acrylates de la formule ci-dessus, on peut citer les acrylates de méthyle, d'éthyle, de n-propyle, d'isopropyle, de n-butyle, de sec.-butyle, de tert.-butyle d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle, d'éthoxyéthyle, de perfluorooctyle, de behenyle.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Comme esters vinyliques, on peut citer l'acétate de vinyle, le propionate de vinyle, le chlorure de vinyle et le fluorure de vinyle.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbonène, les 2-alkyl-2,5-norbonadiènes, le 5-éthylène-2-norbornène, le 5-(2-propényl)-2-norbornène, le 5-(5-héxényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Comme monomère oléfiniques, on peut citer l'éthylène, le butène, l'hexène et le 1-octène. Les monomères oléfiniques fluorés peuvent également être cités.

Le procédé selon l'invention peut être mené entre 50 et 200°C et de préférence entre 100 et 150°C.

Le monomère peut être différent de ceux du groupe suivant : acide acrylique, acide méthacrylique, esters de l'acide acrylique, esters de l'acide méthacrylique, acrylonitrile.

La polymérisation radicalaire peut être amorcée thermiquement, c'est-à-dire sous l'effet de la température et en l'absence d'amorceur de polymérisation radicalaire. La polymérisation peut également être amorcée par un amorceur de polymérisation radicalaire. Certains monomères nécessitent l'usage d'un amorceur, comme les acrylates ou méthacrylates. Les monomères nécessitant l'usage d'un amorceur sont ceux habituellement considérés par l'homme du métier comme nécessitant l'usage d'un amorceur.

Cette question sur la présence ou non d'un amorceur se pose essentiellement pour le début de la polymérisation. Ainsi, dans le cas de la réalisation d'un copolymère à blocs, cette question se pose pour l'amorçage de la polymérisation du premier bloc. En effet, pour la réalisation du second bloc, et, le cas échéant du ou des suivants, la polymérisation s'effectuera par un mécanisme de polymérisation vivante, sans qu'il ne soit nécessaire d'ajouter de l'amorceur. Cependant, il n'est pas exclu d'ajouter de l'amorceur au moment de l'ajout d'un nouveau monomère pour la réalisation d'un nouveau bloc, si l'on souhaite accélérer la vitesse de polymérisation.

La polymérisation peut être menée sous une pression allant de 0,1 bar à 3 000 bars, et de préférence de 0,8 à 100 bars. L'utilisation de hautes pressions, par exemple de 500 à 3 000 bars est recommandée pour la polymérisation de monomères gazeux dans des conditions normales de température et de pression, comme l'éthylène seul ou en présence d'autres monomères.

La polymérisation peut être menée en solution, en masse, en émulsion, en suspension ou dans un milieu supercritique.

Le milieu de polymérisation peut être destiné à mener à un polymère vinylaromatique choc comme le polystyrène choc, auquel cas ledit milieu comprend au moins un monomère vinylaromatique pouvant être le styrène et un caoutchouc, ce dernier étant généralement un polydiène conjugué tel qu'un ou plusieurs polybutadiènes. Un polymère vinylaromatique choc comprend une matrice de polymère vinylaromatique entourant des nodules de caoutchouc, lesdits nodules pouvant présenter des morphologies variées comme celles de gouttelette, capsule, oignon, labyrinthe ou salami.

Dans les exemples qui suivent, on utilise les abréviations suivantes :

- DEPN : N-tertiobutyl-1-diéthyl-phosphono-2,2-diméthylpropyl nitroxyde dont la formule développée est :

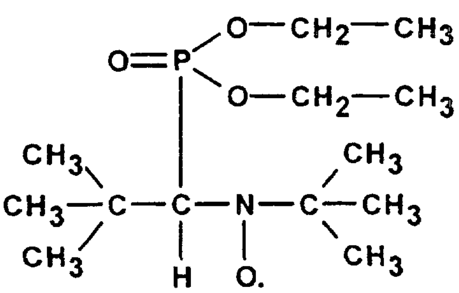

- TEMPO : 2,2,6,6-tétraméthyl-1-piperidinyloxy
- AIBN : azo bis(isobutyronitrile)

Le DEPN présente vis-à-vis du styrène à 125°C une constante d'équilibre de $7,4.10^{-9}$ mole par litre. Cette constante d'équilibre a été mesurée par la technique décrite dans la thèse de doctorat de Didier Benoit, Université de Bordeaux I, France, soutenue le 16 octobre 1997.

Le Tempo présente vis-à-vis du styrène à 125°C une constante d'équilibre de $1.10^{-11}$ mole par litre.

Cette constante d'équilibre a été mesurée par Fukuda, Macromolecules 1996, 29, 6393.

**EXEMPLE 1 (COMPARATIF)**

**Polymérisation du styrène en présence de DEPN, rapport $[F_{SFR} \times (SFR)] / [F_{AMO} \times (AMO)] = 1$ :**

L'AIBN ($9.10^{-5}$ mole), le styrène ($3,45.10^{-2}$ moles) et le DEPN ($1,8.10^{-4}$ mole) sont introduits dans un tube de Schlenk sous azote. Le mélange est dégazé à froid plusieurs fois par un cycle vide azote, puis porté à 125°C dans un bain d'huile pendant plusieurs heures. La conversion en polymère est déterminée par gravimétrie : environ 50 mg de mélange est pesé précisément puis le monomère est évaporé sous vide, la conversion étant déterminée à partir de la différence de poids due à l'évaporation. Les échantillons prélevés sont analysés par Chromatographie d'Exclusion Stérique (CES) avec des étalons de polystyrène. Le tableau ci-dessous rassemble les résultats.

| Temps (h) | Conversion | $M_n$ expérimentale (g/mole) | $M_n$ théorique (g/mole) | $M_w$ / $M_n$ |
|---|---|---|---|---|
| | | | | |
| 0 | 0 | 0 | 0 | |
| 0,5 | 0,28 | | | |
| 2,5 | 0,76 | 19 200 | 15 200 | 1,1 |
| 5 | 0,95 | | | |
| 6 | 0,98 | 25 000 | 19 600 | 1,2 |

**EXEMPLE 2 (COMPARATIF)**

**Polymérisation du styrène en présence de Tempo, rapport [$F_{SFR}$ x (SFR)] / [$F_{AMO}$ x (AMO)] = 1 :**

On procède comme pour l'exemple 1 sauf que le DEPN est remplacé par le même nombre de moles de Tempo. Le tableau ci-dessous rassemble les résultats.

| Temps (h) | Conversion | $M_n$ expérimentale (g/mole) | $M_n$ théorique (g/mole) | $M_w$ / $M_n$ |
|---|---|---|---|---|
| | | | | |
| 0 | 0 | 0 | 0 | - |
| 0,5 | 0,01 | - | - | |
| 2,5 | 0,02 | - | - | |
| 5 | 0,05 | | | |
| 7 | 0,16 | - | - | |
| 9 | 0,31 | | | |
| 11 | 0,42 | | | |
| 13 | 0,61 | | | |
| 14 | 0,66 | | | |
| 15,5 | 0,75 | | | |
| 18 | 0,81 | | | |
| 20 | 0,80 | | | |
| 23 | 0,86 | 15 900 | 17 200 | 1,2 |
| 26,5 | 0,96 | | | |

**EXEMPLE 3**

**Polymérisation du styrène en présence de TEMPO et de DEPN :**

On procède comme pour l'exemple 1 sauf que le DEPN est remplacé par le même nombre de mole d'un mélange à 50 % en mole de DEPN et 50 % en mole de TEMPO. Le tableau ci-dessous rassemble les résultats.

| Temps (h) | Conversion | $M_n$ expérimentale (g/mole) | $M_n$ théorique (g/mole) | $M_w$ / $M_n$ |
|---|---|---|---|---|
| | | | | |
| 0 | 0 | - | - | - |
| 5 | 0,70 | - | - | - |
| 5,25 | 0,75 | - | - | - |

(suite)

| Temps (h) | Conversion | $M_n$ expérimentale (g/mole) | $M_n$ théorique (g/mole) | $M_w$ / $M_n$ |
|---|---|---|---|---|
| 7,25 | 0,98 | 18 300 | 19 600 | 1,2 |
| 9,5 | 0,99 | | | |

La synergie entre les deux radicaux libres stables peut être vérifée en comparant la conversion expérimentale au bout de 5 heures à celle théoriquement attendue compte tenu des conversions obtenues au bout de 5 heures avec chaque radical stable pris individuellement (voir exemples 1 et 2).

Cette synergie peut également être constatée par la mesure de l'écart en % entre la masse moléculaire théorique et la masse moléculaire expérimentale au bout de 5 heures de polymérisation par la formule :

$$\text{écart} = \frac{(\text{Mn expérimentale - Mn théorique})}{\text{Mn théorique}} \times 100$$

Le tableau ci-dessous réalise ces comparaisons.

| Radicaux stables utilisés | Conversion expérimentale après 5h de polymérisation | Conversion calculée par moyenne arythmétique | Ecart entre Mn expérimentale et Mn théorique (%) |
|---|---|---|---|
| **DEPN seul (exemple 1)** | 0,95 | - | 27 |
| **Tempo seul (exemple 2)** | 0,05 | - | 7,5 |
| **50% DEPN + 50% Tempo (exemple 3)** | 0,70 | 0,50 [(0,5x0,95)+ (0,5x0,05)] | 7 |

Cette synergie peut également être constatée par la comparaison des productivités (conversion = 0,95) obtenues pour les exemples 1 à 3 :

| Radicaux stables utilisés | Productivité expérimentale (mg/h) | Productivité calculée par moyenne arythmétique |
|---|---|---|
| **DEPN seul (exemple 1)** | 684 | - |
| **Tempo seul (exemple 2)** | 130 | - |
| **50% DEPN + 50% Tempo (exemple 3)** | 487 | 407 [(0,5x684)+(0,5x130)] |

**EXEMPLE 4 (COMPARATIF)**

On mélange 0,6 g du polystyrène obtenu à l'issue de l'exemple 1 avec 2,4 g d'acrylate de n-butyle dans un tube de Schlenk et l'on dégaze la solution obtenue par un cycle vide-azote. La pression étant revenue à une atmosphère d'azote, le tube de Schlenk est placé dans un bain d'huile à 125°C. La conversion de l'acrylate de n-butyle est suivie par gravimétrie. Le tableau ci-dessous rassemble les résultats.

| Temps (h) | Conversion | $M_n$ expérimentale (g/mole) | $M_n$ théorique (g/mole) | $M_w$ / $M_n$ |
|---|---|---|---|---|
| | | | | |
| 0 | 0 | 25 000 | 25 000 | |
| 3 | 0,22 | | | |
| 5 | 0,30 | | | |
| 5,25 | 0,34 | | | |
| 7,25 | 0,42 | 50 700 | 67 000 | 1,4 |

(suite)

| Temps (h) | Conversion | $M_n$ expérimentale (g/mole) | $M_n$ théorique (g/mole) | $M_w$ / $M_n$ |
|---|---|---|---|---|
| 9,25 | 0,54 | | | |
| | | | | |
| | | | | |

**EXEMPLE 5 (COMPARATIF)**

On procède comme pour l'exemple 4, sauf que l'on utilise au départ 0,53 g du polystyrène de l'exemple 2 et 2,6 g d'acrylate de n-butyle. Le tableau ci-dessous rassemble les résultats.

| Temps (h) | Conversion | $M_n$ expérimentale (g/mole) | $M_w$ / $M_n$ |
|---|---|---|---|
| | | | |
| 0 | 0 | 17 800 | - |
| 1,13 | 0,08 | - | - |
| 3 | 0,10 | - | - |
| 5 | 0,12 | - | - |
| 7 | 0,19 | - | - |
| 11,5 | 0,20 | - | - |
| 14,5 | 0,26 | - | - |
| 20,75 | 0,23 | - | - |
| 37,6 | 0,32 | 20 500 | 1,3 |

**EXEMPLE 6**

On procède comme pour l'exemple 4, sauf que l'on utilise au départ 1 g du polystyrène de l'exemple 3 et 5,1 g d'acrylate de n-butyle. Le tableau ci-dessous rassemble les résultats.

| Temps (h) | Conversion | $M_n$ expérimentale (g/mole) | $M_w$ / $M_n$ |
|---|---|---|---|
| | | | |
| 0 | 0 | 20 000 | |
| 3 | 0,39 | | |
| 5 | 0,44 | 31 600 | 1,6 |
| 7 | 0,51 | | |
| 9 | 0,53 | | |
| 11,5 | 0,56 | | |
| 14 | 0,60 | | |
| 17 | 0,62 | 36 800 | 1,4 |
| 19 | 0,65 | | |
| 21 | 0,65 | | |
| 23 | 0,69 | | |

On constate qu'au bout de 5 heures, la conversion de l'acrylate de n-butyle est supérieure à celle observée

pour le même temps d'essai dans le cas des exemples 4 et 5.

## Revendications

1. Procédé de polymérisation d'au moins un monomère polymérisable par voie radicalaire en présence d'au moins deux radicaux libres stables différents **caractérisé en ce que** les constantes d'équilibre desdits radicaux vis-à-vis du monomère, présentent un rapport supérieur à 5.

2. Procédé selon la revendication précédente **caractérisé en ce que** le rapport est supérieur à 10.

3. Procédé selon la revendication précédente **caractérisé en ce que** le rapport est supérieur à 100.

4. Procédé selon l'une des revendications précédentes **caractérisé en ce qu'**au moins deux des radicaux libres stables sont tels que :

   - le premier présente dans sa structure l'enchaînement

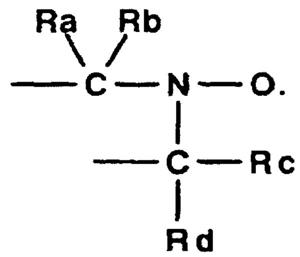

   dans lequel les radicaux Ra, Rb, Rc et Rd, pouvant être identiques ou différents, sont soit un atome d'hydrogène, soit un radical méthyle,
   - le second présente dans sa structure l'enchaînement

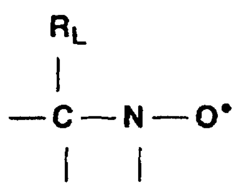

   dans lequel $R_L$ représente un radical monovalent dont la masse molaire est supérieure à 15.

5. Procédé selon la revendication précédente **caractérisé en ce que** $R_L$ présente une masse molaire supérieure à 30.

6. Procédé selon la revendication précédente **caractérisé en ce que** $R_L$ présente une masse molaire allant de 40 à 400.

7. Procédé selon l'une des revendications précédentes **caractérisé en ce que**

   - l'un des deux radicaux libres stables est choisi parmi
     le 2,2,6,6-tétraméthyl-1-piperidinylloxy,
     le 4-hydroxy-2,2,6,6,-tétraméthyl-1-pipéridinyloxy,
     le 4-méthoxy-2,2,6,6-tétraméthyl-1-pipéridinyloxy,
     le 4-oxo-2,2,6,6-tétraméthyl-1-pipéridinyloxy,
     le bis(1-oxyl-2,2,6,6-tétra méthylpipéridine-4-yl) sébacate,
     le 2,2,6,6-tétraméthyl-4-hydroxypipéridine-1-oxyl monophosphonate,

le 3-carboxy-2,2,5,5-tétraméthylpirrolidinyloxy,
et,

- l'autre des deux radicaux libres stables est choisi parmi
le N-tertiobutyl-1-diéthyl-phosphono-2,2-diméthylpropylnitroxyde,
le N-tertiobutyl-1-dibenzylphosphono-2,2-diméthylpropyl nitroxyde,
le N-tertiobutyl-1-di(2,2,2-trifluoroéthyl)phosphono-2,2-diméthyl propyl nitroxyde,
le N-tertiobutyl-[(1-diéthylphosphono)-2 méthyl propyl] nitroxyde,
le N-(1-méthyléthyl)-1-cyclohexyl-1-(diéthylphosphono) nitroxyde,
le N-(1-phényl benzyl)-[(1-diéthyl phosphono)-1-méthyl éthyl] nitroxyde.

**8.** Procédé selon l'une des revendications précédentes **caractérisé en ce que**

$$\sum_{i=1}^{t} [F_{SFR}^{i} \times (SFR^{i})]$$

aille de $5.10^{-7}$ à 0,5 mole par mole de monomère, $F_{SFR}^{i}$ représentant la fonctionnalité du $i^{ème}$ radical libre stable $SFR^{i}$, t représentant le nombre de radicaux libres stables dans le milieu de polymérisation, $(SFR^{i})$ représentant le nombre de mole du ième radical libre stable. $(SFR^{i})$ représentant le nombre de mole du $i^{ème}$ radical libre stable.

**9.** Procédé selon la revendication précédente **caractérisé en ce que**

$$\sum_{i=1}^{t} [F_{SFR}^{i} \times (SFR^{i})]$$

aille de $5.10^{-6}$ à 0,5 mole par mole de monomère.

**10.** Procédé selon l'une des revendications précédentes **caractérisé en ce que** au moins deux radicaux libres stables sont présents en quantités telles que le rapport

$$\frac{F_{SFR}^{1} \cdot (SFR^{1})}{F_{SFR}^{2} \cdot (SFR^{2})}$$

aille de 0,001 à 1 000,
dans lequel
$F_{SFR}^{1}$ représente la fonctionnalité d'un premier radical libre stable $SFR^{1}$,
$(SFR^{1})$ représente le nombre de mole dudit premier radical libre stable,
$F_{SFR}^{2}$ représente la fonctionnalité d'un second radical libre stable $SFR^{2}$,
$(SFR^{2})$ représente le nombre de mole dudit second radical libre stable.

**11.** Procédé selon la revendication précédente **caractérisé en ce que**

$$\frac{F_{SFR}^{1} \cdot (SFR^{1})}{F_{SFR}^{2} \cdot (SFR^{2})}$$

aille de 0,01 à 100.

**12.** Procédé selon l'une des revendications précédentes **caractérisé en ce qu'**au moins un amorceur de polymérisation radicalaire est introduit dans le milieu de polymérisation en quantité telle que $F_{AMO}$ . (AMO) aille de $1.10^{-5}$ à 0,1 mole par mole de monomère, $F_{AMO}$ représentant la fonctionnalité de l'amorceur, (AMO) représentant le nombre de mole d'amorceur.

13. Procédé selon la revendication précédente **caractérisé en ce que** $F_{AMO}$ . (AMO) va de $1.10^{-4}$ à 0,1 mole par mole de monomère.

14. Procédé selon l'une des revendications précédentes **caractérisé en ce qu'**il est mené entre 100 et 150°C.

15. Procédé selon l'une des revendications précédentes **caractérisé en ce que** plusieurs monomères sont introduits successivement de façon à mener à un copolymère à blocs.

16. Procédé selon l'une des revendications précédentes **caractérisé en ce que** la conversion de monomère en polymère est supérieure à 0,5.

17. Procédé selon l'une des revendications précédentes **caractérisé en ce que** la présence des deux radicaux libres stables résulte en une synergie lors de la polymérisation.

18. Procédé selon l'une des revendications précédentes **caractérisé en ce qu'**au moins un monomère est choisi parmi les monomères vinyliques, vinylidéniques, diéniques, oléfiniques et allyliques.

19. Procédé selon la revendication précédente **caractérisé en ce qu'**au moins un monomère est vinylaromatique.

20. Procédé selon la revendication précédente **caractérisé en ce qu'**au moins un monomère est le styrène.

21. Procédé selon la revendication 19 ou 20 **caractérisé en ce qu'**il mène à un polymère vinylaromatique choc comprenant une matrice de polymère vinylaromatique et des nodules de caoutchouc.

22. Procédé selon la revendication précédente **caractérisé en ce qu'**au moins un monomère est acrylate ou méthacrylate.

23. Procédé selon l'une des revendications 1 à 21 **caractérisé en ce que** le monomère est différent de ceux du groupe suivant : acide acrylique, acide méthacrylique, esters de l'acide acrylique, esters de l'acide méthacrylique, acrylonitrile.

**Claims**

1. Process for the polymerization of at least one monomer which can be polymerized by the radical route in the presence of at least two different stable free radicals, **characterized in that** the equilibrium constants of the said radicals with respect to the monomer exhibit a ratio of greater than 5.

2. Process according to the preceding claim, **characterized in that** the ratio is greater than 10.

3. Process according to the preceding claim, **characterized in that** the ratio is greater than 100.

4. Process according to one of the preceding claims, **characterized in that** at least two of the stable free radicals are such that:

- the first exhibits, in its structure, the linkage

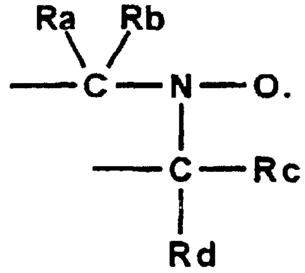

in which the Ra, Rb, Rc and Rd radicals, which can be identical or different, are either a hydrogen atom or a methyl radical,

- the second exhibits, in its structure, the linkage

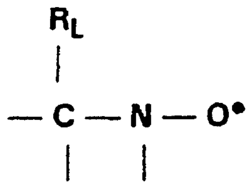

in which $R_L$ represents a monovalent radical with a molar mass of greater than 15.

**5.** Process according to the preceding claim, **characterized in that** $R_L$ exhibits a molar mass of greater than 30.

**6.** Process according to the preceding claim, **characterized in that** $R_L$ exhibits a molar mass ranging from 40 to 400.

**7.** Process according to one of the preceding claims, **characterized in that**

- one of the two stable free radicals is chosen from
  2,2,6,6-tetramethyl-1-piperidinyloxy,
  4-hydroxy-2,2,6,6-tetramethyl-1-piperidinyloxy,
  4-methoxy-2,2,6,6-tetramethyl-1-piperidinyloxy,
  4-oxo-2,2,6,6-tetramethyl-1-piperidinyloxy,
  bis(1-oxyl-2,2,6,6-tetramethylpiperidin-4-yl) sebacate,
  2,2,6,6-tetramethyl-4-hydroxypiperidin-1-oxyl monophosphonate,
  3-carboxy-2,2,5,5-tetramethylpyrrolidinyloxy,
  and
- the other of the two stable free radicals is chosen from
  N-tert-butyl-1-diethylphosphono-2,2-dimethylpropyl nitroxide,
  N-tert-butyl-1-dibenzylphosphono-2,2-dimethylpropyl nitroxide,
  N-tert-butyl-1-di(2,2,2-trifluoroethyl)phosphono-2,2-dimethylpropyl nitroxide,
  N-tert-butyl-1-diethylphosphono-2-methylpropyl nitroxide,
  N-(1-methylethyl)-1-(diethylphosphono)cyclohexyl nitroxide,
  N-(1-phenylbenzyl)-1-diethylphosphono-1-methylethyl nitroxide.

**8.** Process according to one of the preceding claims, **characterized in that**

$$\sum_{i=1}^{t} [F_{SFR}^{i} \times (SFR^{i})]$$

ranges from $5 \times 10^{-7}$ to 0.5 mol per mole of monomer, $F_{SFR}^{i}$ representing the functionality of the ith stable free radical $SFR^{i}$, t representing the number of stable free radicals in the polymerization medium and $(SFR^{i})$ representing the number of moles of the ith stable free radical.

**9.** Process according to the preceding claim, **characterized in that**

$$\sum_{i=1}^{t} [F_{SFR}^{i} \times (SFR^{i})]$$

ranges from $5 \times 10^{-6}$ to 0.5 mol per mole of monomer.

**10.** Process according to one of the preceding claims, **characterized in that** at least two stable free radicals are present in amounts such that the ratio

$$\frac{F_{SFR}^{1} \times (SFR^{1})}{F_{SFR}^{2} \times (SFR^{2})}$$

ranges from 0.001 to 1000,
in which
$F_{SFR}^1$ represents the functionality of a first stable free radical $SFR^1$,
($SFR^1$) represents the number of moles of the said first stable free radical,
$F_{SFR}^2$ represents the functionality of a second stable free radical $SFR^2$,
($SFR^2$) represents the number of moles of the said second stable free radical.

**11.** Process according to the preceding claim, **characterized in that**

$$\frac{F_{SFR}^{1} \times (SFR^{1})}{F_{SFR}^{2} \times (SFR^{2})}$$

ranges from 0.01 to 100.

**12.** Process according to one of the preceding claims, **characterized in that** at least one radical polymerization initiator is introduced into the polymerization medium in an amount such that $F_{INI} \times (INI)$ ranges from $1 \times 10^{-5}$ to 0.1 mol per mole of monomer, $F_{INI}$ representing the functionality of the initiator and (INI) representing the number of moles of initiator.

**13.** Process according to the preceding claim, **characterized in that** $F_{INI} \times (INI)$ ranges from $1 \times 10^{-4}$ to 0.1 mol per mole of monomer.

**14.** Process according to one of the preceding claims, **characterized in that** it is carried out between 100 and 150°C.

**15.** Process according to one of the preceding claims, **characterized in that** several monomers are introduced successively, so as to result in a block copolymer.

**16.** Process according to one of the preceding claims, **characterized in that** the conversion of monomer to polymer is greater than 0.5.

**17.** Process according to one of the preceding claims, **characterized in that** the presence of the two stable free radicals results in a synergy during the polymerization.

**18.** Process according to one of the preceding claims, **characterized in that** at least one monomer is chosen from vinyl, vinylidene, diene, olefinic and allylic monomers.

**19.** Process according to the preceding claim, **characterized in that** at least one monomer is a vinylaromatic monomer.

**20.** Process according to the preceding claim, **characterized in that** at least one monomer is styrene.

**21.** Process according to Claim 19 or 20, **characterized in that** it results in a high-impact vinylaromatic polymer comprising a vinylaromatic polymer matrix and rubber nodules.

**22.** Process according to the preceding claim, **characterized in that** at least one monomer is acrylate or methacrylate.

**23.** Process according to one of Claims 1 to 21, **characterized in that** the monomer is different from those of the following group: acrylic acid, methacrylic acid, acrylic acid esters, methacrylic acid esters and acrylonitrile.

**Patentansprüche**

1. Verfahren zur Polymerisation mindestens eines auf radikalischem Weg in Gegenwart mindestens zweier verschiedener stabiler freier Radikale polymerisierbaren Monomers, **dadurch gekennzeichnet, daß** die Gleichgewichtskonstanten der Radikale, bezogen auf das Monomer, ein Verhältnis von mehr als 5 aufweisen.

2. Verfahren nach dem vorhergehenden Anspruch, **dadurch gekennzeichnet, daß** das Verhältnis größer als 10 ist.

3. Verfahren nach dem vorhergehenden Anspruch, **dadurch gekennzeichnet, daß** das Verhältnis größer als 100 ist.

4. Verfahren nach einem der vorhergehenden Ansprüche, **dadurch gekennzeichnet, daß** mindestens zwei der stabilen freien Radikale derart sind, daß

   - das erste stabile freie Radikal in seiner Struktur die Kette

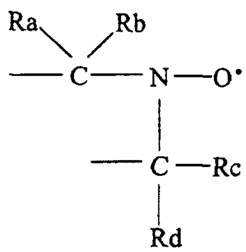

     aufweist, wobei die Reste Ra, Rb, Rc und Rd, identisch oder verschieden, ein Wasserstoffatom oder ein Methylrest sind,

   - das zweite stabile freie Radikal in seiner Struktur die Kette

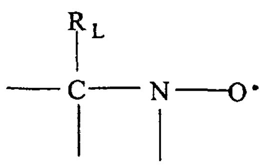

     aufweist, wobei $R_L$ einen einwertigen Rest, dessen Molekularmasse größer als 15 ist, darstellt.

5. Verfahren nach dem vorhergehenden Anspruch, **dadurch gekennzeichnet, daß** $R_L$ eine Molekularmasse von mehr als 30 aufweist.

6. Verfahren nach dem vorhergehenden Anspruch, **dadurch gekennzeichnet, daß** $R_L$ eine Molekularmasse von 40 bis 400 aufweist.

7. Verfahren nach einem der vorhergehenden Ansprüche, **dadurch gekennzeichnet, daß**

   - eines der stabilen freien Radikale ausgewählt ist aus
     2,2,6,6-Tetramethyl-1-piperidinyloxy,
     4-Hydroxy-2,2,6,6-tetramethyl-1-piperidinyloxy,
     4-Methoxy-2,2,6,6-tetramethyl-1-piperidinyloxy,
     4-Oxo-2,2,6,6-tetramethyl-1-piperidinyloxy,
     Bis(1-oxyl-2,2,6,6-tetramethylpiperidin-4-yl)sebacat,
     2,2,6,6-Tetramethyl-4-hydroxypiperidin-1-oxylmonophosphonat,
     3-Carboxy-2,2,5,5-tetramethylpyrrolidinyloxy; und

   - das andere der zwei stabilen freien Radikale ausgewählt ist aus
     N-Tertiobutyl-1-diethylphosphono-2,2-dimethylpropylnitroxid,

N-Tertiobutyl-1-dibenzylphosphono-2,2-dimethylpropylnitroxid,
N-Tertiobutyl-1-di(2,2,2-trifluorethyl)phosphono-2,2-dimethylpropylnitroxid,
N-Tertiobutyl-[(1-diethylphosphono)-2-methylpropyl]nitroxid,
N-(1-Methylethyl)-1-cyclohexyl-1-(diethylphosphono)nitroxid und
N-(1-Phenylbenzyl)-[(1-diethylphosphono)-1-methylethyl]nitroxid.

**8.** Verfahren nach einem der vorhergehenden Ansprüche, **dadurch gekennzeichnet**,

$$\sum_{i=1}^{t}\left[F_{SFR^i} \times \left(SFR^i\right)\right]$$

von $5 \cdot 10^{-7}$ bis 0,5 mol pro mol Monomer geht, wobei
$F_{SFR^i}$ die Funktionalität des i-ten stabilen freien Radikals $SFR^i$ darstellt,
t die Anzahl der stabilen freien Radikale in dem Polymerisationsmilieu darstellt,
$(SFR^i)$ die Anzahl der mol des i-ten stabilen freien Radikals darstellt.

**9.** Verfahren nach dem vorhergehenden Anspruch, **dadurch gekennzeichnet, daß**

$$\sum_{i=1}^{t}\left[F_{SFR^i} \times \left(SFR^i\right)\right]$$

von $5 \cdot 10^{-6}$ bis 0,5 mol pro mol Monomer geht.

**10.** Verfahren nach einem der vorhergehenden Ansprüche, **dadurch gekennzeichnet, daß** mindestens zwei stabile freie Radikale in solchen Mengen vorhanden sind, daß das Verhältnis

$$\frac{F_{SFR^1} \cdot (SFR^1)}{F_{SFR^2} \cdot (SFR^2)}$$

von 0,001 bis 1.000 geht, wobei
$F_{SFR^1}$ die Funktionalität eines ersten stabilen freien Radikals $SFR^1$ darstellt,
$(SFR^1)$ die Anzahl der mol des ersten stabilen freien Radikals darstellt,
$F_{SFR^2}$ die Funktionalität eines zweiten stabilen freien Radikals $SFR^2$ darstellt und
$(SFR^2)$ die Anzahl der mol des zweiten stabilen freien Radikals darstellt.

**11.** Verfahren nach dem vorhergehenden Anspruch, **dadurch gekennzeichnet, daß** das Verhältnis

$$\frac{F_{SFR^1} \cdot (SFR^1)}{F_{SFR^2} \cdot (SFR^2)}$$

von 0,01 bis 100 geht.

**12.** Verfahren nach einem der vorhergehenden Ansprüche, **dadurch gekennzeichnet, daß** mindestens ein radikalischer Polymerisationsstarter in einer solchen Menge zu dem Polymerisationsmilieu hinzugegeben wird, daß $F_{AMO}$ • (AMO) von $1 \cdot 10^{-5}$ bis 0,1 mol pro mol Monomer geht, wobei $F_{AMO}$ die Funktionalität des Starters darstellt und (AMO) die Anzahl der mol des Starters darstellt.

**13.** Verfahren nach dem vorhergehenden Anspruch, **dadurch gekennzeichnet, daß** $F_{AMO} \cdot$ (AMO) von $1 \cdot 10^{-4}$ bis 0,1 mol pro mol Monomer geht.

**14.** Verfahren nach einem der vorhergehenden Ansprüche, **dadurch gekennzeichnet, daß** es bei Temperaturen von 100 bis 150 °C durchgeführt wird.

**15.** Verfahren nach einem der vorhergehenden Ansprüche, **dadurch gekennzeichnet, daß** mehrere Monomere aufeinanderfolgend hinzugegeben werden derart, daß sie zu einem Blockcopolymer führen.

**16.** Verfahren nach einem der vorhergehenden Ansprüche, **dadurch gekennzeichnet, daß** die Umsetzung Monomer zu Polymer größer als 0,5 ist.

**17.** Verfahren nach einem der vorhergehenden Ansprüche, **dadurch gekennzeichnet, daß** die Anwesenheit der zwei stabilen freien Radikale in einer Synergie bei der Polymerisation resultiert.

**18.** Verfahren nach einem der vorhergehenden Ansprüche, **dadurch gekennzeichnet, daß** mindestens ein Monomer ausgewählt ist aus Vinylmonomeren, Vinylidenmonomeren, Dienmonomeren, Olefinmonomeren und Allylmonomeren.

**19.** Verfahren nach dem vorhergehenden Anspruch, **dadurch gekennzeichnet, daß** mindestens ein Monomer ein vinylaromatisches Monomer ist.

**20.** Verfahren nach dem vorhergehenden Anspruch, **dadurch gekennzeichnet, daß** mindestens ein Monomer Styrol ist.

**21.** Verfahren nach Anspruch 19 oder 20, **dadurch gekennzeichnet, daß** es zu einem schlagfesten vinylaromatischen Polymer, welches eine vinylaromatische Polymermatrix und Kautschukkügelchen umfaßt, führt.

**22.** Verfahren nach dem vorhergehenden Anspruch, daß mindestens ein Monomer ein Acrylat oder Methacrylat ist.

**23.** Verfahren nach einem der Ansprüche 1 bis 21, **dadurch gekennzeichnet, daß** das Monomer verschieden ist von denen der folgenden Gruppe: Acrylsäure, Methacrylsäure, Acrylsäureester, Methacrylsäureester und Acrylnitril.